# EUROPÄISCHE PATENTSCHRIFT

(11) **EP 4 015 205 B1**
(45) Veröffentlichungstag und Bekanntmachung des Hinweises auf die Patenterteilung: **25.02.2026**
(21) Anmeldenummer: 21210460.8
(22) Anmeldetag: 25.11.2021
(51) Int. Cl.: B29D 30/30, B29D 30/32, B29D 30/72, B29D 30/26

(54) **VERFAHREN ZUM AUFBAUEN EINES FAHRZEUGREIFENS MIT INVERSER SEITENWAND**
METHOD FOR BUILDING A VEHICLE TYRE WITH AN INVERTED SIDE WALL
PROCÉDÉ DE CONSTRUCTION D'UN PNEU DE VÉHICULE À PAROI LATÉRALE INVERSÉE

(30) Priorität: 17.12.2020 DE 102020216103
(43) Veröffentlichungstag der Anmeldung: 22.06.2022
(73) Patentinhaber: Continental Reifen Deutschland GmbH, 30175 Hannover (DE)
(72) Erfinder: Dietrich, Holger, 30165 Hannover (DE); El Khadrami, Zouhair, 30165 Hannover (DE); Ernst, Gerald, 30165 Hannover (DE); Höer, Thorsten, 30165 Hannover (DE); Kneussel, Ewald, 30165 Hannover (DE); Mauruschat, Rainer, 30165 Hannover (DE); Thomfohrde, Claudia, 30165 Hannover (DE)
(74) Vertreter: Continental Corporation

(56) Entgegenhaltungen:
- EP-A1- 1 216 814
- EP-A1- 3 205 489
- WO-A1-2013/191692
- WO-A1-2018/228621
- JP-A- 2013 071 433

## Beschreibung

Die Erfindung betrifft ein Verfahren zum Aufbauen eines Fahrzeugreifens gemäß dem Oberbegriff des Patentanspruchs 1.

Die Produktion eines Fahrzeugreifens erfolgt heutzutage in verschiedenen Fertigungsstufen, wobei einer dieser Fertigungsstufen den Reifenaufbau umfasst, bei dem die einzelnen Komponenten zu einem Reifenrohling zusammengefügt werden. Die wesentlichen Komponenten umfassen üblicherweise eine Karkasse, zwei Seitenwände und ein Gürtelpaket, wobei die Karkasse selbst in der Regel aus einer Innenschicht, einer Einlage und zwei Kernen mit Apex besteht. Der Aufbau eines Reifenrohlings erfolgt im Stand der Technik auf einer oder mehreren Trommeln, wobei die einzelnen Komponenten von Hand oder automatisch aufgelegt und zusammengefügt werden. Das Zusammenfügen der zwei Seitenwände mit der Karkasse ist ein hoch komplexer Verfahrensschritt, dessen Ziel es ist, die Seitenwand entlang der Oberfläche der Karkasse anzuordnen. In derzeitig bekannten Verfahren wird die Seitenwand, die üblicherweise eine flache und eine erhabene Seite aufweist, nach unten entlang der Karkasse in Richtung der Wulst gearbeitet oder gebogen, wobei die flache Seite in Richtung der Karkasse zeigt. Das Oberflächenprofil der erhabenen Seite der Seitenwand soll entsprechend nach dem Vulkanisieren auf der sichtbaren Außenfläche der Seitenwand angeordnet sein.

In derzeitig bekannten Verfahren, bei denen die Seitenwand nach oben Entlang der Karkasse in Richtung Karkassmitte gearbeitet oder gebogen wird, zeigt die flache Seite der Seitenwand, die üblicherweise eine flache und eine erhabene Seite aufweist, nach oben. Die Oberfläche der Seitenwand mit der erhabenen Seite liegt somit vor dem Hocharbeiten oder Hochbiegen unten. Das Oberflächenprofil der erhabenen Seite befindet sich damit nach dem Hocharbeiten der Seitenwand außen am Rohling und entspricht somit, exakt oder in etwa, der Kontur der Oberfläche des vulkanisierten Reifens.

In der EP1216814A1 ist ein Verfahren offenbart, wobei auf einer Bautrommel eine zylindrische Karkassenhülle hergestellt wird, die mindestens eine Karkassenlage mit Endklappen umfasst, die an entsprechenden ringförmigen Verstärkungsstrukturen nach oben umgeschlagen sind.

Aufgrund der Vielzahl von unterschiedlichen Oberflächenprofilen, die eine Seitenwand aufweisen kann, erweisen sich die derzeitigen Prozesse in Bezug auf den Zusammenbau der Komponenten zu einem Reifenrohlings auf einer Trommel, insbesondere in der Automatisierung solcher Prozesse, als kompliziert. Insbesondere das Zuschneiden und Fördern der Seitenwände hin zur Trommel erweisen sich als problematisch, da die Oberflächen der Fördereinheiten immer dem jeweiligen erhabenen Oberflächenprofil angepasst werden müssen. Andernfalls können die Seitenwände nur instabil gefördert und sonstig verarbeitet werden. Hier weisen die derzeitig bekannten Verfahren, die Seitenwände mit einer erhabenen und einer flachen Seite hocharbeiten, einen gravierenden Nachteil auf.

Hier setzt die vorliegende Erfindung an. Es ist die Aufgabe der vorliegenden Erfindung ein Verfahren zum Aufbauen eines Fahrzeugreifens bereitzustellen, bei der eine Seitenwand einfacher im Prozess des Reifenaufbaus verarbeitet werden kann. Ferner wird eine Vorrichtung bereitgestellt, mit der eine Seitenwand einfacher im Prozess des Reifenaufbaus verarbeitet werden kann.

Gelöst wird die Aufgabe durch ein Verfahren zum Aufbauen eines Fahrzeugreifens mit den Merkmalen des Patentanspruchs 1. Vorteilhafte Ausgestaltungen und Varianten der Erfindung ergeben sich aus den abhängigen Ansprüchen und der nachfolgenden Beschreibung und/oder den beigefügten Figuren. So können die in den Ansprüchen einzeln aufgeführten Merkmale in beliebiger, technisch sinnvoller Weise miteinander als auch mit den in der nachfolgenden Beschreibung näher erläuterten Merkmalen kombiniert werden und andere vorteilhafte Ausführungsvarianten der Erfindung darstellen.

Gelöst wird die Aufgabe durch ein Verfahren zum Aufbauen eines Fahrzeugreifens, umfassend die Herstellung eines Reifenrohlings, der eine Karkasse, mindestens zwei Seitenwände und ein Gürtelpaket umfasst, wobei die Herstellung des Reifenrohlings mindestens folgende Schritte umfasst:
i) Bereitstellen von mindestens zwei Seitenwänden, wobei die Seitenwände jeweils eine flache und eine erhabene Seite aufweisen,
ii) Auflegen der mindestens zwei Seitenwände mit der flachen Seite auf mindestens eine Trommel,
iii) Hocharbeiten der mindestens zwei Seitenwände jeweils entlang einer Oberfläche der Karkasse, wobei die erhabene Seite der Seitenwände in Richtung der Karkasse zeigt und
iv) Zusammenfügen der mindestens zwei Seitenwände mit der Karkasse und dem Gürtelpaket zu einem Reifenrohling,

wobei der Schritt iv) des Zusammenfügens vor oder nach dem Hocharbeiten erfolgen kann,
wobei das Verfahren einen Vulkanisationsprozess umfasst, indem die erhabene Seite der Seitenwand nach außen durchgedrückt wird.

Das erfindungsgemäße Verfahren erlaubt es einen Reifenrohling mit hoher Präzision herzustellen, da die Seitenwand als Bauteil mit der flachen Seite auf der Trommel aufgelegt werden kann. Ferner ist es von Vorteil, dass die Seitenwand in jedem Prozess des Führens oder des Förderns auf der flachen Seite zur Trommel geführt werden kann, sodass die Führungsoberfläche einer Führungseinheit, beispielsweise einem Förderband, für einen ganzflächigen Kontakt mit der aufliegenden Seite der Seitenwand nicht individuell an das Oberflächenprofil der aufliegenden Seite der Seitenwand angepasst werden muss. Vorteilhaft ist dabei, dass das gleichmäßige Zuschneiden der Seitenwand dadurch wesentlich erleichtert wird und die durch den Schnitt erzielbare Splicequalität deutlich erhöht ist.

Üblicherweise umfasst ein Reifenrohling eine Karkasse, mindestens zwei Seitenwände und ein Gürtelpaket. Vorliegend umfasst die Karkasse eine Innenschicht, eine Einlage und zwei Kerne mit Apex. Die Karkasse wird üblicherweise schichtweise aufgebaut, wobei der Kern und Apex mit der Innenschicht und der Einlage verbunden werden. Erfindungsgemäß umfasst die Karkasse zumindest ein Karkassbauteil, wobei die Karkasse entweder als fertiges Karkassbauteil an die Seitenwände herangeführt wird oder alternativ erst beim Hocharbeiten zu einer Karkasse zusammengeführt wird. Ein Gürtelpaket umfasst üblicherweise zwei Gürtel, eine Spulbandage und einen Laufstreifen.

Die erfindungsgemäße Seitenwand kann unterschiedlich ausgestaltet sein. Wesentlich ist, dass die Seitenwand mindestens eine flache Seite aufweist. Die flache Seite ist eine ebene beziehungsweise planare Fläche, die vorteilhafterweise einfach ganzflächig auf eine andere flache Ebene gelegt beziehungsweise mit dieser verbunden werden kann, wodurch das Fördern der Seitenwand zur Trommel einfach ausführbar ist. Die Seitenwand kann somit auf der flachen Seite zur Trommel gefördert und anschließend mit der flachen Seite auf die Trommel gelegt werden, wodurch der Prozessablauf deutlich vereinfacht wird. Ferner weist die Seitenwand erfindungsgemäß mindestens eine zweite Seite auf, die erhaben ist und vorzugsweise gegenüber der flachen Seite angeordnet ist. Die erhabene Seite kann unterschiedliche Oberflächenprofile aufweisen. Das Oberflächenprofil der erhabenen Seite ist üblicherweise das Profil, dass der Fahrzeugreifen nach der Vulkanisation im Bereich der Seitenwand sichtbar aufweist oder diesem ähnlich ist.

Ferner weist die Seitenwand mindestens ein Gummi, bevorzugt mindestens eine Gummimischung, besonders bevorzugt mindestens drei Gummimischungen, auf. Die Seitenwand ist im Sinne der Erfindung biegbar und/oder verformbar, sodass die Seitenwand auf einer Trommel aufgerollt und in einem nächsten Schritt hochgearbeitet werden kann.

Bevorzugt erfolgt das Auflegen von einer Seitenwand mit der flachen Seite auf eine Trommel und das Auflegen einer zweiten Seitenwand mit der flachen Seite auf eine zweite Trommel. Der Abstand der Trommeln zueinander kann variabel sein, wobei der Abstand üblicherweise der Breite einer Karkasse aufweist, die an die Seitenwände herangeführt wird. In einer anderen Ausführungsform werden zwei Seitenwände mit der flachen Seite auf jeweils eine Trommel gelegt werden. Anschließend werden diese Trommeln mit den Seitenwänden jeweils an eine Seite einer dritten Trommel herangeführt, auf der eine Karkasse angeordnet ist. In einem weiteren Schritt werden die Seitenwände dann an der Karkasse hochgearbeitet und mit einem Gürtelpaket zusammengeführt oder erst zusammengeführt und dann hochgearbeitet. Vorteilhafterweise kann der Abstand der beiden Seitenwände jeder beliebigen Karkassengröße angepasst werden. In einer anderen bevorzugten Ausführungsform werden zwei Seitenwände mit der flachen Seite auf eine Trommel gelegt, wobei der Abstand der Seiten so individuell der Breite der Karkasse angepasst werden kann.

Das erfindungsgemäße Hocharbeiten der Seitenwand erfolgt durch einen Prozess des Verformens oder Biegens ausgehend vom Wulstbereich entlang der Oberfläche einer Karkasse. Im Sinne der Erfindung ist ein Hocharbeiten ein Verformen der Seitenwand ausgehend vom Wulstbereich der Karkasse hoch entlang der Oberfläche der Karkasse. Nach dem Hocharbeiten zeigt die erhabene Seite der Seitenwand in Richtung der Oberfläche der Karkasse. Die erhabene Seite der Seitenwand wird bei der anschließenden Vulkanisation nach außen durchgedrückt, sodass das erhabene Oberflächenprofil nach der Vulkanisation im Wesentlichen auf der äußeren Seitenwand sichtbar ist. Lufteinschlüsse, die beim Hocharbeiten der Seitenwand zwischen der Seitenwand und der Karkasse entstehen können, verschwinden beim Vulkanisationsprozess.

Im Sinne der Erfindung wird die Seitenwand entweder vor oder nach dem Hocharbeiten im Anschluss mit der Karkasse und einem Gürtelpaket zusammengefügt oder verbunden. Bevorzugt können sich die beiden Arbeitsschritte auch zeitlich überlagern. Denkbar ist, dass dieser Prozess automatisiert quasi zeitgleich erfolgt, wodurch der Aufbau des Reifens schneller erfolgt.

Das Zusammenfügen oder Verbinden ist im Sinne der Erfindung ein miteinander Verkleben der überlappenden Flächen durch aufgebauten Druck. Dies erfolgt üblicherweise durch aufblähbare Gummibauteile, vorzugsweise in Kombination mit Umschlagsglocken, durch mechanische Elemente, vorzugsweise mindestens einem Finger, oder durch die Kombination aus beidem.

In einer bevorzugten Ausführungsform erfolgt das Hocharbeiten mit mindestens einem Balg. Ein Balg ist vorteilhaft, da die Seiten durch das Aufblasen des Balgs in einem automatisierten Prozess passgenau an die Karkasse angeordnet werden kann. Bevorzugt kann ein Balg schlauchförmig ausgebildet sein, wobei sich dieser durch die Zufuhr von Luft oder einem anderen Medium ausdehnt. Üblicherweise bestehen solche Bälge aus Gummi, wobei andere Materialien denkbar sind, die dehnbar sind.

In einer bevorzugten Ausführungsform erfolgt das Hocharbeiten mit mindestens einem mechanischen Element, bevorzugt mindestens einem Finger oder mindestens einem Finger mit mindestens einer Rolle, wobei der mindestens eine Finger besonders bevorzugt mit einer Manschette überzogen ist. Ein mechanisches Element ist vorteilhafterweise so ausgebildet, dass es die Seitenwand von der aufgelegten Position auf der Trommel in die hochgearbeitete Position befördern kann und danach wieder die Ausgangsposition einnimmt. Der Prozess verläuft üblicherweise automatisiert ab. Ein wesentlicher Vorteil ist, dass die Seitenwand an der flachen Seite durch die mechanischen Elemente optimal hochgearbeitet werden können. Die Seitenwände werden immer über die flache Seite hochgearbeitet, sodass die mechanischen Elemente bezüglich der Oberfläche nicht individuell der Seitenwand angepasst werden müssen. Vorteilhaft ist, wenn mehrere mechanischen Elemente auf der Mantelfläche der Trommel angeordnet sind, sodass zumindest eine Seitenwand in einem Schritt hochgearbeitet werden kann. Entsprechendes gilt für die zweite Seitenwand.

In einer bevorzugten Ausgestaltung ist das mindestens eine mechanische Element als ein Finger ausgebildet. Ein Finger kann die Seitenwand optimal und passgenau hocharbeiten, ohne dass die Seitenwand falten bildet. Unter einem Finger wird im Sinne der Erfindung ein stabförmiges Element verstanden, insbesondere eines aus Metall. Besonders bevorzugt sind die Finger jeweils mit einer Manschette überzogen, damit die Finger keine Abdrücke in der Seitenwand auf der flachen Seite erzeugen. Eine Manschette ist üblicherweise aus Gummi.

Weiter bevorzugt ist der mindestens eine Finger an mindestens einer Rolle angeordnet. Denkbar ist, dass mindestens ein Finger über eine Rolle unterschiedliche Positionen einnehmen können. Dazu können die Finger die Seitenwand einfacher hocharbeiten. Besonders bevorzugt sind die Finger jeweils mit einer Manschette überzogen, damit die Finger die Oberfläche der Seitenwand nicht zerstören.

In einer bevorzugten Ausführungsform schließt sich nach Schritt ii) ein folgender Schritt iia) an:
iia) Zusammenführen der Wulstbereiche der Karkasse mit der jeweils erhabenen Seite der mindestens zwei Seitenwände, wobei das Zusammenführen bevorzugt über eine Transfereinrichtung erfolgt.

Entsprechend umfasst das Verfahren in dieser Ausführungsform die folgenden Schritte:
i) Bereitstellen von mindestens zwei Seitenwänden, wobei die Seitenwände jeweils eine flache und eine erhabene Seite aufweisen,
ii) Auflegen der mindestens zwei Seitenwände mit der flachen Seite auf mindestens eine Trommel,
iia) Zusammenführen der Wulstbereiche der Karkasse mit der jeweils erhabenen Seite der mindestens zwei Seitenwände, wobei das Zusammenführen bevorzugt über eine Transfereinrichtung erfolgt,
iii) Hocharbeiten der mindestens zwei Seitenwände jeweils entlang einer Oberfläche der Karkasse, wobei die erhabene Seite der Seitenwände in Richtung der Karkasse zeigt und
iv) Zusammenfügen der mindestens zwei Seitenwände mit der Karkasse und dem Gürtelpaket zu einem Reifenrohling,
wobei der Schritt iv) des Zusammenfügens vor oder nach dem Hocharbeiten erfolgen kann.

In dieser Ausführungsform wird die Karkasse in einem separaten Schritt hergestellt und anschließend mit den mindestens zwei Seitenwänden verbunden. Üblicherweise werden die Karkasse und die mindestens zwei Seitenwände in einem Schritt zusammengeführt. Denkbar ist auch, dass zuerst die erste Seitenwand und dann die zweite Seitenwand an die Karkasse herangeführt wird. Ein Vorteil dieser Ausführungsform ist, dass die Karkasse vor dem Zusammenführen mit den Seitenwänden bereits ein stabiles Gefüge bildet und individuell angepasst und ausgearbeitet werden kann.

In einer alternativen bevorzugten Ausführungsform umfasst die Herstellung des Reifenrohlings folgende Schritte, wobei die Schritte i) und ii) durch i') und ii') ersetzt werden:
i') Bereitstellen von mindestens einer Innenschicht und mindestens zwei Seitenwänden, wobei die Seitenwände jeweils eine flache und eine erhabene Seite aufweisen,
ii') Auflegen der mindestens einen Innenschicht und der mindestens zwei Seitenwände mit der flachen Seite auf eine Trommel,
iia') Aufbauen der Karkasse durch Aufbringen der Einlage und der zwei Kerne mit Apex auf die mindestens eine Innenschicht.

Entsprechend umfasst das Verfahren in dieser Ausführungsform die folgenden Schritte:
i') Bereitstellen von mindestens einer Innenschicht und mindestens zwei Seitenwänden, wobei die Seitenwände jeweils eine flache und eine erhabene Seite aufweisen,
ii') Auflegen der mindestens einen Innenschicht und der mindestens zwei Seitenwände mit der flachen Seite auf eine Trommel,
iia') Aufbauen der Karkasse durch Aufbringen der Einlage und der zwei Kerne mit Apex auf die mindestens eine Innenschicht,
iii) Hocharbeiten der mindestens zwei Seitenwände jeweils entlang einer Oberfläche der Karkasse, wobei die erhabene Seite der Seitenwände in Richtung der Karkasse zeigt und
iv) Zusammenfügen der mindestens zwei Seitenwände mit der Karkasse und dem Gürtelpaket zu einem Reifenrohling,
wobei der Schritt des Zusammenfügens vor oder nach dem Hocharbeiten erfolgen kann.

In dieser Ausführungsform wird die Karkasse mit den Seitenwänden auf einer Trommel aufgebaut. Vorteilhafterweise sind für den Aufbau so weniger Schritte notwendig, wodurch Kosten gesenkt werden können. In einem ersten Schritt werden die mindestens eine Innenschicht und die mindestens zwei Seitenwände auf eine Trommel gelegt. Entweder wird zuerst die Innenschicht und danach die Seitenwände oder zuerst die Seitenwände und dann die Innenschicht auf die Trommel gelegt. Denkbar ist aber auch, dass mindestens zwei Seitenwände mit mindestens einer Innenschicht zuerst zu einem Kombibauteil verbunden werden, wobei das Kombibauteil in einem nächsten Schritt auf die Trommel gelegt wird, wobei die flache Seite der Seitenwände auf der Trommel aufliegt.

In einer weiteren bevorzugten Ausführungsform ist die eine Trommel eine Bombiertrommel oder eine Wickeltrommel oder eine kombinierte Bombier- und Wickeltrommel. Vorteilhafterweise kann die Karkasse einfacher mit der Seitenwand auf der Bombiertrommel oder Wickeltrommel oder der kombinierten Bombier- und Wickeltrommel aufgebaut und verbunden werden.

In einer bevorzugten Ausführungsform ist die Karkasse ein Karkassschlauch und/oder eine vorgeformte und/oder eine bombierte Karkasse. Der Karkassschlauch umfasst üblicherweise eine Einlage und eine Innenschicht. Vorteilhafterweise kann die Karkasse als flacher Schlauch mit den Seitenwänden verbunden werden, wobei die flache Seite der Seitenwände unten liegt. Alternativ können die Seitenwände an den Karkassschlauch angeheftet werden, wobei die flache Seite der Seitenwände unten liegt. Anschließend wird der flache Schlauch mit den Seitenwänden mit dem Gürtelpaket verbunden, wobei die flache Seite der Seitenwände unten liegt. Dieses ist für Schläuche mit und ohne Vorbombieren möglich. Ferner ist denkbar, dass die Karkasse vorteilhafterweise eine vorgeformte Karkasse ist, bei der die Lagen der Karkasse schon um den Kern herumgearbeitet und vorzugsweise mit den Seitenwänden bereits verbunden sind, wobei die flache Seite der Seitenwände unten liegt beziehungsweise von der Karkasse weg zeigen. Anschließend wird diese vorgeformte Karkasse mit Seitenwänden mit dem Gürtelpaket verbunden, während die flache Seite der Seitenwand von der Karkasse weg zeigt, wobei das erhabene Profil erst in einem anschließenden Vulkanisationsprozess durchgedrückt wird.

In einer erfindungsgemäßen Ausführungsform umfasst das Verfahren einen Vulkanisationsprozess indem die erhabene Seite der Seitenwand nach außen durchgedrückt wird. Vorteilhafterweise ist das erhabene Oberflächenprofil der Seitenwand dann außen am Reifen sichtbar. Üblicherweise schließt sich der Vulkanisationsprozess der Herstellung des Reifenrohlings an, wobei zwischen diesen Schritten andere Schritte denkbar sind. Beispielsweise könnte der aufgebaute Reifenrohling besprüht werden, damit dieser nicht in der Heizform festklebt.

Ferner bezieht sich die vorliegende Anmeldung auf eine Vorrichtung zur Durchführung des beschriebenen Verfahrens, wobei die Vorrichtung mindestens eine Trommel zum Auflegen mindestens einer Seitenwand umfasst und an der Trommel mindestens ein Balg und/oder mindestens ein mechanisches Element angeordnet ist, wobei der Balg und das mechanische Element dazu ausgebildet sind, die mindestens eine Seitenwand entlang einer Oberfläche einer Karkasse hochzuarbeiten.

Bevorzugt weist die Vorrichtung ein Förderband auf, dass eine flache Oberfläche zur Förderung mindestens einer Seitenwand mit einer flachen Seite aufweist. Vorteilhafterweise kann die Seitenwand einfach auf der flachen Seite zur Trommel gefördert werden und anschließend mit der flachen Seite auf die Trommel gelegt werden.

In einer bevorzugten Ausgestaltung umfasst die Vorrichtung mindestens eine Transfereinrichtung zum Zusammenführen der Karkasse an die mindestens eine Seitenwand, insbesondere an die erhabene Seite der Seitenwand. Vorteilhafterweise wird die Karkasse individuell in einem extra Schritt aufgebaut und dann über die Transfereinrichtung mit der mindestens einen Seitenwand auf der Trommel zusammengeführt. Dieser Prozess verläuft in der Regel automatisiert.

Weitere Vorteile und Merkmale des erfindungsgemäßen Verfahrens sowie der Vorrichtung ergeben sich aus den Unteransprüchen, die sich auf vorteilhafte Ausgestaltungen der vorliegenden Erfindung beziehen und als solche nicht einschränkend zu verstehen sind. Von der Erfindung mit umfasst sind auch Kombinationen der Merkmale verschiedener Unteransprüche, soweit diese technisch möglich sind, auch wenn sich die Unteransprüche nicht aufeinander beziehen oder wenn diese verschiedenen Anspruchskategorien zugehören. Ferner sind auch Kombinationen von bevorzugten und besonders bevorzugten Ausführungsformen untereinander miteinander kombinierbar, soweit diese technisch möglich sind. Dies gilt auch für die einzelnen Merkmale der nachfolgend diskutierten Ausführungsbeispiele, soweit diese nicht für den Fachmann als zwingend zueinander gehörig erkennbar sind.

### Figurenbeschreibung

Weitere Einzelheiten und Vorteile der vorliegenden Erfindung ergeben sich aus der nachfolgenden Beschreibung der Ausführungsführungsbeispiele in Verbindung mit den Zeichnungen. In diesen zeigen
- Figuren 1a-e: fünf Ausgestaltungen einer Seitenwand in Seitenansicht mit unterschiedlichen erhabenen Oberflächenprofilen,
- Figuren 2a-b: zwei verschiedene mögliche Ausführungsformen des Zuförder- und Auflegeprozesses von zwei Seitenwänden auf eine Trommel beziehungsweise zwei Trommeln in schräger Seitenansicht,
- Figuren 3a-c: eine Anordnung einer Karkasse in Bezug auf eine Seitenwand zum Hocharbeiten und zwei Möglichkeiten einer Anordnung einer Seitenwand in Bezug auf die Karkasse mit zwei verschiedenen Ausführungen des Hocharbeitens der Seitenwand und des Zusammenfügens mit dem Gürtelpaket, jeweils in Seitenansicht,
- Figuren 4a-c: eine Anordnung eines Karkassschlauchs in Bezug auf eine Seitenwand zum Hocharbeiten und zwei Möglichkeiten einer Anordnung einer Seitenwand in Bezug auf einen Karkassschlauch mit zwei verschiedenen Ausführungen des Hocharbeitens der Seitenwand und des Zusammenfügens mit dem Gürtelpaket, jeweils in Seitenansicht,
- Figuren 5a-b: jeweils eine Ausführungsform sowohl eines Balgs als auch eines mechanischen Elements in Kombination mit einem Gummibauteil zum Hocharbeiten der Seitenwand an eine Karkasse und
- Figur 6: eine Anordnung von zwei Seitenwänden und einer Innenschicht auf einer Trommel in schräger Ansicht.

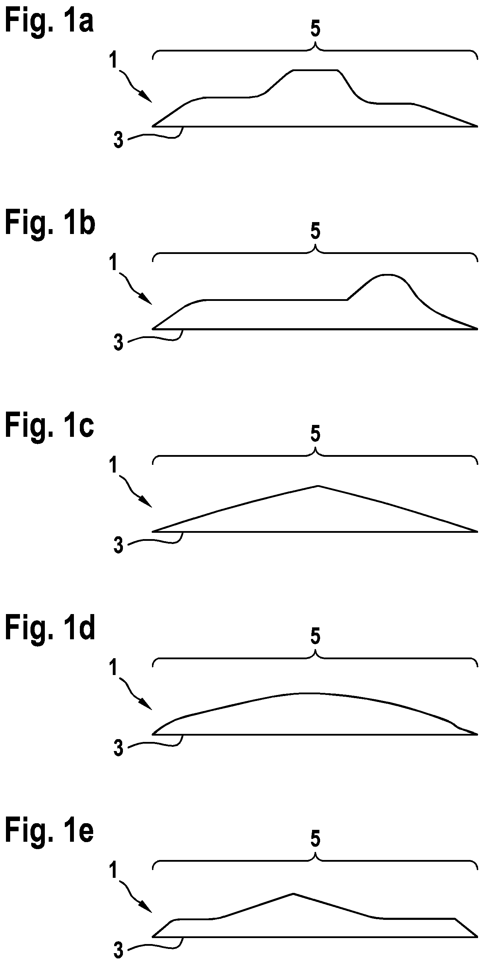

Figuren 1a bis 1e zeigen fünf Ausgestaltungen einer Seitenwand 1 mit unterschiedlichen Oberflächenprofilen. Jede Seitenwand 1 weist eine flache Seite 3 und eine erhabene Seite 5 mit einem anderen Oberflächenprofil auf. Das Oberflächenprofil der erhabenen Seite 5 ist im Wesentlichen nach dem Vulkanisationsprozess am Reifen an der Seitenwand außen sichtbar.

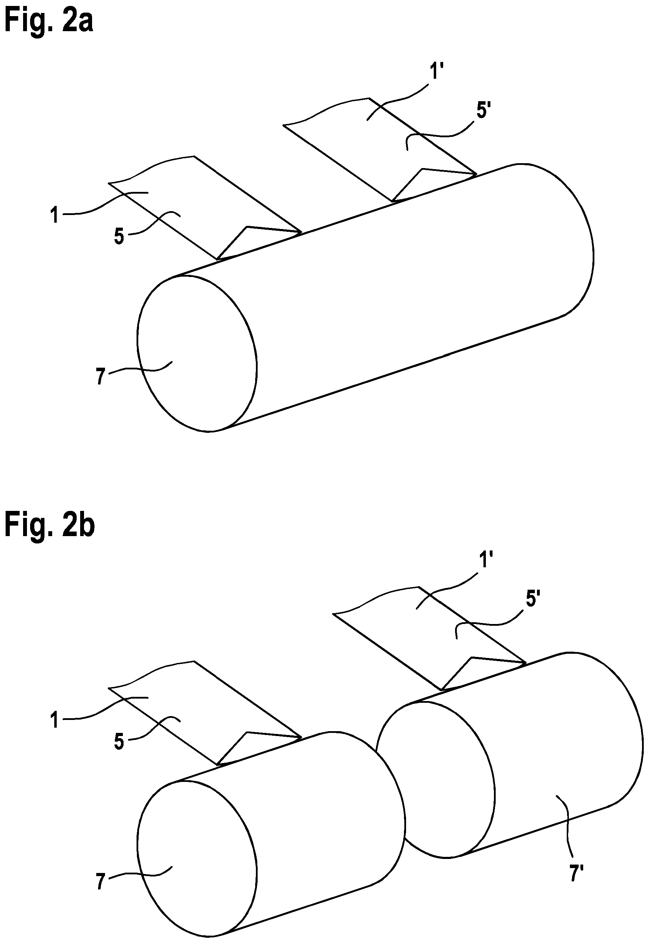

Figur 2a zeigt eine erste und eine zweite Seitenwand 1, 1' mit jeweils einer erhabenen Seite 5, einer flachen Seite 3 und eine Trommel 7. Die Trommel 7 ist als rotierbarer zylindrischer Körper ausgebildet auf dessen Mantelfläche die beiden Seitenwände 1, 1' jeweils mit der flachen Seite 3 aufgelegt werden. Der Abstand der Seitenwände 1, 1' zueinander kann variieren und ist abhängig von der Breite einer Karkasse, die in einem späteren Schritt mit den Seitenwänden 1, 1' zusammengefügt wird.

Figur 2b zeigt die erste Seitenwand 1 einer ersten separaten Trommel 7 und die zweite Seitenwand 1' auf einer zweiten separaten Trommel 7', wobei die Seitenwände 1, 1' jeweils mit der flachen Seite 3 auf der Mantelfläche der separaten Trommeln 7, 7' aufgelegt sind. Der Abstand zwischen den separaten Trommeln 7, 7' kann der Breite der Karkasse individuell angepasst werden.

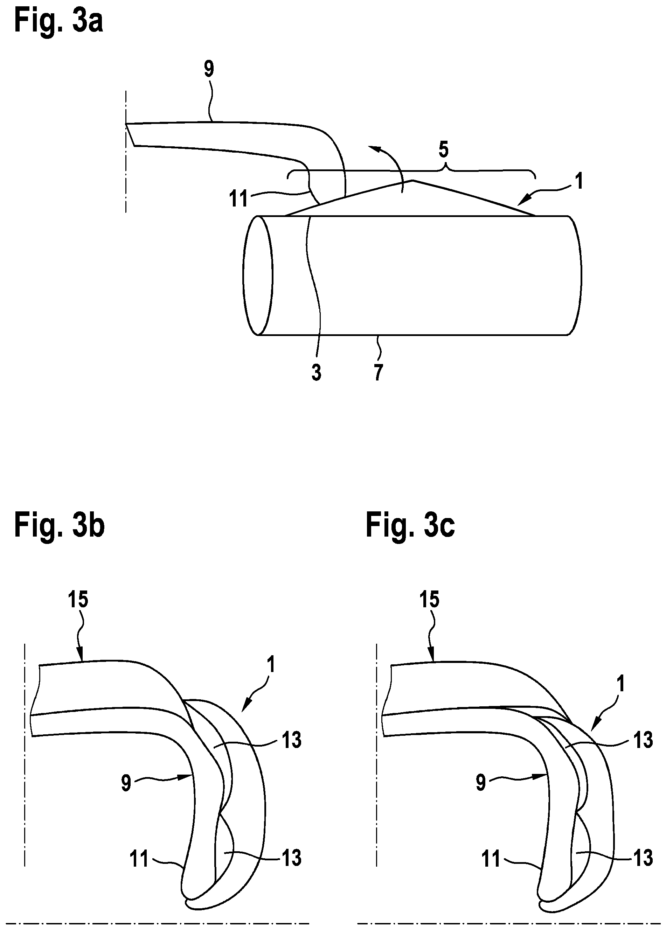

Figur 3a zeigt die Seitenwand 1 angeordnet mit der flachen Seite 3 auf der Mantelfläche der Trommel 7. Beim Zusammenführen einer Karkasse 9 mit der Seitenwand 1 wird der Wulstbereich 11 der Karkasse 9 mit einem endständigen Bereich der erhabenen Seite 5 der Seitenwand 1 zusammengeführt. Die Seitenwand 1 wird in einem nächsten Schritt entlang der Oberfläche der Karkasse 9 außen hochgearbeitet. Nach dem Hocharbeiten erstreckt sich die erhabene Seite 5 der Seitenwand 1 entlang der Oberfläche der Karkasse 9, wobei die flache Seite 3 von der Karkasse 9 weg zeigt (siehe Figur 3b und 3c). Figur 3b zeigt die Anordnung der Seitenwand 1 in Bezug auf die Karkasse 9 nach dem Hocharbeiten. Zwischen der erhabenen Seite 5 der Seitenwand 1 und der Oberfläche der Karkasse 9 sind Lufteinschlüsse 13 angeordnet, die aufgrund der erhabenen Oberflächenstruktur erzeugt werden. Nachdem die Seitenwand 1 mit der Oberfläche der Karkasse 9 verbunden ist, wird für die finale Herstellung des Reifenrohlings in einem anschließenden Schritt ein Gürtelpaket 15 auf die Karkasse 9 aufgebracht. Figur 3c zeigt eine andere Variante des Zusammenfügens, in der das Gürtelpaket 15 auf der Karkasse 9 angeordnet ist und die Seitenwand 1 das Gürtelpaket 15 miteinschließt.

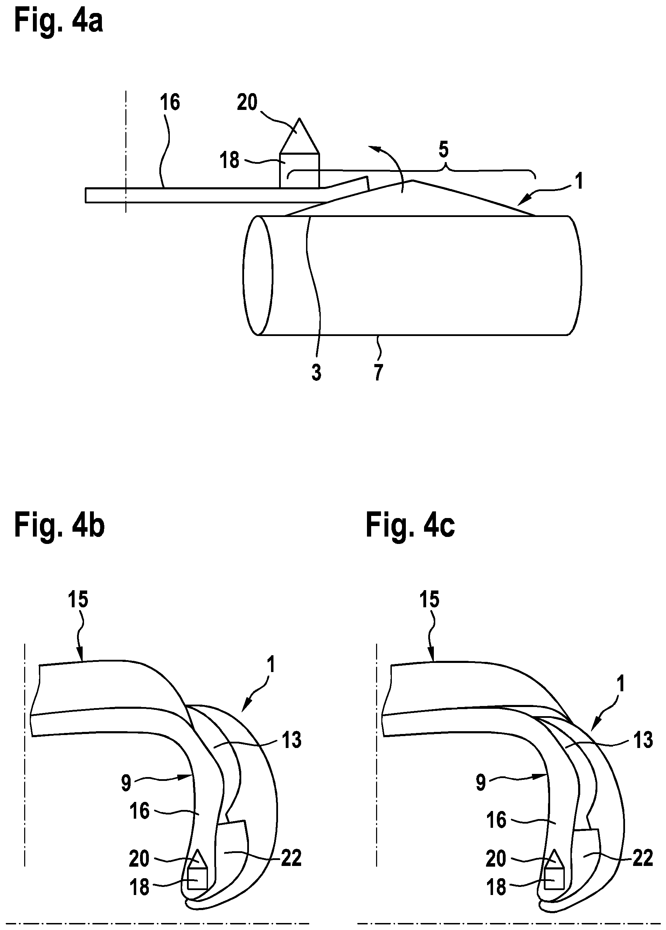

Figur 4a zeigt im Prinzip den Vorgang des Hocharbeitens der Seitenwand 1, der in Figur 3a-c dargestellt ist. Im Unterschied ist, dass die Karkasse 9 nicht als ein Bauteil ausgebildet, sondern einen flachen Karkassschlauch 16 umfasst, der durch das Hocharbeiten der Seitenwand 1 um einen Kern 18 und einem Apex 20 geformt wird. Der Kern 18 und das Apex 20 sind nach dem Hocharbeiten und dem Zusammenfügen mit dem Gürtelpaket als ein Bauteil einer Karkasse 9 ausgebildet (siehe Figur 4b und 4c). Zwischen der Karkasse und der Seitenwand ist nach dem Hocharbeiten zusätzlich ein Wulstverstärker 22 angeordnet, der für eine zusätzliche Stabilität sorgt.

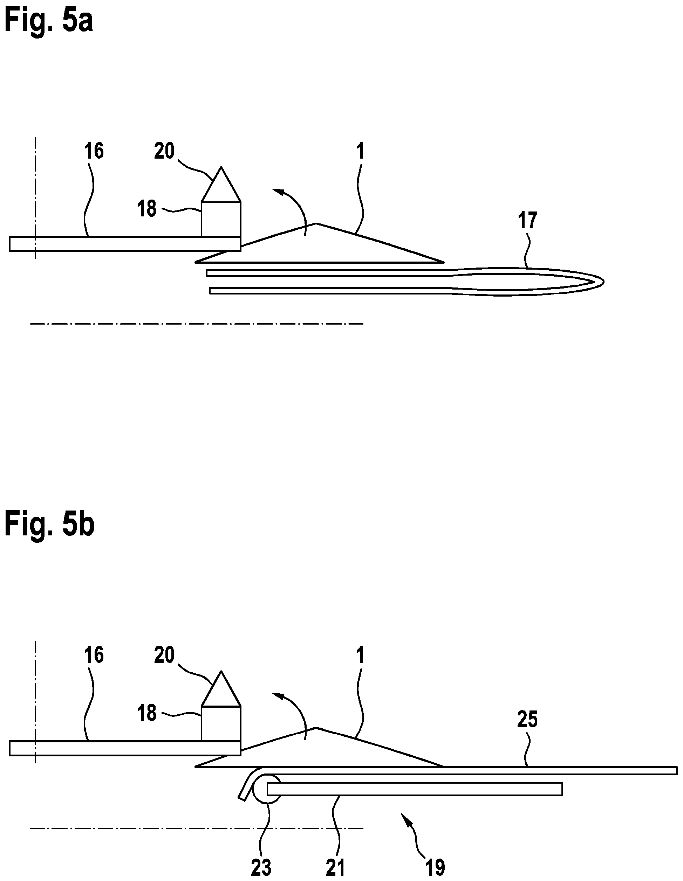

Figur 5a zeigt eine Ausführungsform des Hocharbeitens der Seitenwand 1 entlang der Oberfläche des Karkassschlauchs 16 mit einem Balg 17. Die Karkasse 9 besteht aus dem flachen Karkassschlauch 16, dem Kern 18 und dem Apex 20. Der Balg 17 ist als aufblasbarer ringförmiger Schlauch ausgebildet. Die Seitenwand 1 ist mit der flachen Seite 3 teilweise auf dem nicht aufgeblasenen Balg 17 aufgelegt. Durch das Aufblasen des Balgs 17 wird die Seitenwand 1 entlang der Oberfläche des Karkassschlauchs 16 hochgearbeitet, wobei die erhabene Seite 5 der Seitenwand 1 letztendlich zur Karkasse 9 zeigt.

Figur 5b zeigt eine andere Ausführungsform des Hocharbeitens der Seitenwand 1 mit einem mechanischen Element 19, das aus einer Rolle 21, einem Finger 23 und einer Manschette 25 besteht. Die Rolle 21 ist als Gelenk ausgebildet, über das der Finger 23 in Richtung der der Oberfläche des Karkassschlauchs 16 bewegt werden kann. Die Manschette 25 besteht üblicherweise aus Gummi und ist über den Finger 23 gespannt, sodass dieser die Seitenwand 1 nicht beschädigt oder in die Oberfläche der Seitenwand 1 eindrückt. Durch die Bewegung des Fingers 23 wird die Seitenwand 1 entlang der Oberfläche des Karkassschlauchs 16 hochgearbeitet, wobei die erhabene Seite 5 der Seitenwand 1 letztendlich zur Karkasse 9 zeigt.

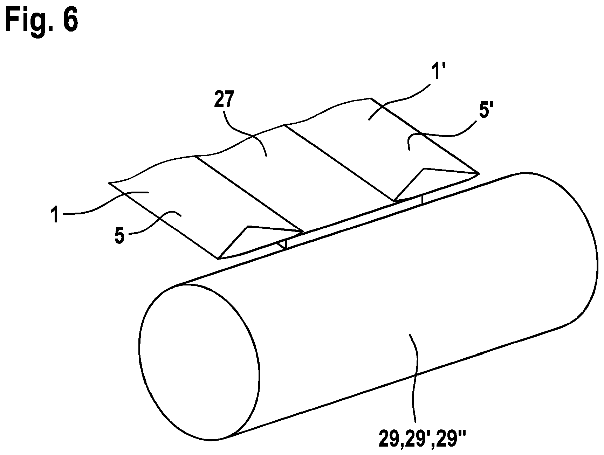

Figur 6 zeigt einen Ausschnitt einer alternativen Ausführungsform der Erfindung in schräger Seitenansicht, in der die jeweils flache Seite 3, 3' der ersten und der zweiten Seitenwand 1, 1' mit einer Innenschicht 27 auf eine Bombiertrommel 29 oder eine Wickeltrommel 29' oder eine kombinierte Bombier- und Wickeltrommel 29'' aufgelegt werden. Die Seitenwände 1, 1' überlappen auf der Längsseite jeweils teilweise mit der Innenschicht 27, wobei diese Überlappung vor dem Auflegen oder mit dem Auflegen auf die Bombiertrommel 29 oder Wickeltrommel 29' oder kombinierte Bombier- und Wickeltrommel 29'' erfolgen kann. Somit können die Seitenwände 1, 1' und die Innenschicht 27 vor dem Auflegen zu einem Bauteil oder während der Applikation kombiniert werden. Nachdem die beiden Seitenwände 1, 1' mit der Innenschicht 27 auf die Bombiertrommel 29 oder Wickeltrommel 29' oder kombinierte Bombier- und Wickeltrommel 29" aufgebracht wurden, wird die Karkasse 9 durch Aufbringen weiterer Schichten, beispielsweise der Einlage und der zwei Kerne mit Apex, auf der Innenschicht 27 aufgebaut. Durch das anschließende Hocharbeiten der Seitenwände 1, 1' und dem Zusammenfügen der Seitenwände 1, 1' mit der Karkasse 9 und dem Gürtelpaket 15 wird der Reifenrohling final hergestellt.

### Bezugszeichenliste

1 Seitenwand
1' zweite Seitenwand
3 flache Seite der Seitenwand
3' flache Seite der zweiten Seitenwand
5 erhabene Seite der Seitenwand
5' erhabene Seite der zweiten Seitenwand
7 Trommel
7' zweite Trommel
9 Karkasse
11 Wulstbereich
13 Lufteinschlüsse
15 Gürtel/Gürtelpaket
16 Karkassschlauch
17 Balg
18 Kern
19 mechanisches Element
20 Apex
21 Rolle
22 Wulstverstärker
23 Finger
25 Manschette
27 Innenschicht
29 Bombiertrommel
29' Wickeltrommel
29" kombinierte Bombier- und Wickeltrommel

## Patentansprüche

1. Verfahren zum Aufbauen eines Fahrzeugreifens, umfassend die Herstellung eines Reifenrohlings, der eine Karkasse (9), mindestens zwei Seitenwände (1, 1') und ein Gürtelpaket (15) umfasst,
wobei die Herstellung des Reifenrohlings mindestens folgende Schritte umfasst:
i) Bereitstellen von mindestens zwei Seitenwänden (1, 1'), wobei die Seitenwände (1,1') jeweils eine flache und eine erhabene Seite (3,3',5,5') aufweisen,
ii) Auflegen der mindestens zwei Seitenwände (1,1') mit der flachen Seite (3,3') auf mindestens eine Trommel (7),
iii) Hocharbeiten der mindestens zwei Seitenwände (1,1') jeweils entlang einer Oberfläche der Karkasse (9), wobei die erhabene Seite (5,5') der Seitenwände in Richtung der Karkasse (9) zeigt und
iv) Zusammenfügen der mindestens zwei Seitenwände (1,1') mit der Karkasse (9) und dem Gürtelpaket (15) zu einem Reifenrohling,
wobei der Schritt des Zusammenfügens vor oder nach dem Hocharbeiten erfolgen kann,
**dadurch gekennzeichnet, dass**
das Verfahren einen Vulkanisationsprozess umfasst, indem die erhabene Seite (5,5') der Seitenwand (1,1') nach außen durchgedrückt wird.

2. Verfahren nach Anspruch 1, **dadurch gekennzeichnet, dass** das Hocharbeiten mit mindestens einem Balg (17) erfolgt.

3. Verfahren nach Anspruch 1 oder 2, **dadurch gekennzeichnet, dass** das Hocharbeiten mit mindestens einem mechanischen Element (19), bevorzugt mindestens einem Finger (23) oder mindestens einem Finger (23) mit mindestens einer Rolle (21), erfolgt, wobei der mindestens eine Finger (23) besonders bevorzugt mit einer Manschette (25) überzogen ist.

4. Verfahren nach einem der vorherigen Ansprüche, **dadurch gekennzeichnet, dass** sich nach Schritt ii) ein Schritt iia) anschließt:
iia) Zusammenführen der Wulstbereiche der Karkasse (9) mit der jeweils erhabenen Seite (5,5') der mindestens zwei Seitenwände (1,1'), wobei das Zusammenführen bevorzugt über eine Transfereinrichtung erfolgt.

5. Verfahren nach einem der Ansprüche 1 bis 3, **dadurch gekennzeichnet, dass** die Herstellung des Reifenrohlings folgende Schritte i'), ii') und iia') umfasst, wobei die Schritte i) und ii) durch i') und ii') ersetzt werden:
i') Bereitstellen von mindestens einer Innenschicht (27) und mindestens zwei Seitenwänden (1,1'), wobei die Seitenwände (1,1') jeweils eine flache und eine erhabene Seite (3,3',5,5') aufweisen,
ii') Auflegen der mindestens einen Innenschicht (27) und der mindestens zwei Seitenwände (1,1') mit der flachen Seite (3,3') auf eine Trommel (7),
iia') Aufbauen der Karkasse (9) durch Aufbringen der Einlage und der zwei Kerne (18) mit Apex (20) auf die mindestens eine Innenschicht (27).

6. Verfahren nach Anspruch 5, **dadurch gekennzeichnet, dass** die eine Trommel (7) eine Bombiertrommel (29) oder eine Wickeltrommel (29') oder eine kombinierte Bombier- und Wickeltrommel (29'') ist.

7. Verfahren nach einem der vorherigen Ansprüche, **dadurch gekennzeichnet, dass** die Karkasse (9) ein Karkassschlauch (16) und/oder eine vorgeformte Karkasse und/oder eine bombierte Karkasse ist.

## Claims

1. Method for building up a vehicle tyre, comprising the production of a green tyre which comprises a carcass (9), at least two sidewalls (1, 1') and a belt assembly (15), the production of the green tyre comprising at least the following steps:
i) providing at least two sidewalls (1, 1'), the sidewalls (1, 1') each having a flat side (3.3') and a raised side (5.5'),
ii) placing the at least two sidewalls (1, 1') with the flat side (3, 3') on at least one drum (7),
iii) working up the at least two side walls (1, 1') respectively along a surface of the carcass (9), the raised side (5, 5') of the sidewalls facing in the direction of the carcass (9), and
iv) joining together the at least two sidewalls (1, 1') with the carcass (9) and the belt assembly (15) to form a green tyre,
wherein the joining-together step can take place before or after the working-up operation, **characterized in that** the method comprises a vulcanization process, by pressing the raised side (5, 5') of the sidewall (1, 1') through outwardly.

2. Method according to Claim 1, **characterized in that** the working-up operation is carried out using at least one bellows (17).

3. Method according to Claim 1 or 2, **characterized in that** the working-up operation is carried out using at least one mechanical element (19), preferably at least one finger (23) or at least one finger (23) with at least one pulley (21), the at least one finger (23) particularly preferably being covered with a sleeve (25).

4. Method according to one of the preceding claims, **characterized in that** step ii) is followed by a step iia):
iia) bringing together the bead regions of the carcass (9) with the respective raised side (5, 5') of the at least two sidewalls (1, 1'), the bringing-together operation preferably being carried out via a transfer device.

5. Method according to one of Claims 1 to 3, **characterized in that** the production of the green tyre comprises the following steps i'), ii') and iia'), steps i) and ii) being replaced by i') and ii'):
i') providing at least one inner layer (27) and at least two sidewalls (1, 1'), the sidewalls (1, 1') each having a flat side (3.3') and a raised side (5.5'),
ii') placing the at least one inner layer (27) and the at least two sidewalls (1, 1') with the flat side (3, 3') on a drum (7),
iia') building up the carcass (9) by applying the insert and the two cores (18) with apexes (20) to the at least one inner layer (27).

6. Method according to claim 5, **characterized in that** one drum (7) is a shaping drum (29) or a winding drum (29') or a combined shaping and winding drum (29").

7. Method according to one of the preceding claims, **characterized in that** the carcass (9) is a carcass tube (16) and/or a preformed carcass and/or a shaped carcass.

## Revendications

1. Procédé de fabrication d'un pneu de véhicule, comprenant la fabrication d'une ébauche de pneu qui comprend une carcasse (9), au moins deux parois latérales (1, 1') et un paquet de ceinture (15), la fabrication de l'ébauche de pneu comprenant au moins les étapes suivantes
i) la fourniture d'au moins deux parois latérales (1, 1'), les parois latérales (1, 1') présentant chacune un côté plat et un côté surélevé (3, 3', 5, 5'),
ii) la pose des au moins deux parois latérales (1, 1') avec le côté plat (3, 3') sur au moins un tambour (7),
iii) le relevage des au moins deux parois latérales (1, 1') respectivement le long d'une surface de la carcasse (9), le côté surélevé (5, 5') des parois latérales étant orienté en direction de la carcasse (9) ; et
iv) l'assemblage des au moins deux parois latérales (1, 1') avec la carcasse (9) et le paquet de ceinture (15) en une ébauche de pneu,
l'étape d'assemblage pouvant être effectuée avant ou après le relevage, **caractérisé en ce que** le procédé comprend un processus de vulcanisation dans lequel le côté surélevé (5, 5') de la paroi latérale (1, 1') est pressé vers l'extérieur.

2. Procédé selon la revendication 1, **caractérisé en ce que** le relevage s'effectue avec au moins un soufflet (17).

3. Procédé selon la revendication 1 ou 2, **caractérisé en ce que** le relevage s'effectue avec au moins un élément mécanique (19), de préférence au moins un doigt (23) ou au moins un doigt (23) avec au moins un rouleau (21), l'au moins un doigt (23) étant de manière particulièrement préférée recouvert d'un manchon (25).

4. Procédé selon l'une quelconque des revendications précédentes, **caractérisé en ce que** l'étape ii) est suivie d'une étape iia) :
iia) l'assemblage des zones de bourrelet de la carcasse (9) avec le côté surélevé (5, 5') de chacune des au moins deux parois latérales (1, 1'), l'assemblage s'effectuant de préférence par l'intermédiaire d'un dispositif de transfert.

5. Procédé selon l'une quelconque des revendications 1 à 3, **caractérisé en ce que** la fabrication de l'ébauche de pneu comprend les étapes suivantes i'), ii') et iia'), les étapes i) et ii) étant remplacées par i') et ii') :
i') la fourniture d'au moins une couche intérieure (27) et d'au moins deux parois latérales (1, 1'), les parois latérales (1, 1') présentant chacune un côté plat et un côté surélevé (3, 3', 5, 5'),
ii') la pose de l'au moins une couche intérieure (27) et des au moins deux parois latérales (1, 1') avec le côté plat (3, 3') sur un tambour (7),
iia') la construction de la carcasse (9) par application de l'insert et des deux tringles (18) avec apex (20) sur l'au moins une couche intérieure (27).

6. Procédé selon la revendication 5, **caractérisé en ce que** le tambour (7) est un tambour bombé (29) ou un tambour d'enroulement (29') ou un tambour combiné bombé et d'enroulement (29").

7. Procédé selon l'une quelconque des revendications précédentes, **caractérisé en ce que** la carcasse (9) est un tube de carcasse (16) et/ou une carcasse préformée et/ou une carcasse bombée.
